# FASCICULE DE BREVET EUROPEEN

(11) **EP 4 070 520 B1**
(45) Date de publication et mention de la délivrance du brevet: **28.05.2025**
(21) Numéro de dépôt: 20812356.2
(22) Date de dépôt: 01.12.2020
(51) Int. Cl.: H04W 12/02, H04W 12/06, H04L 9/40, H04L 67/1097, G06F 21/32, H04L 9/32, H04L 9/08, H04W 12/03, G06F 21/36, H04W 4/80, H04W 12/08, H04W 12/0431, H04W 12/63, H04W 12/77

(54) **PROCEDE ET SYSTEME D'IDENTIFICATION D'UN INDIVIDU SANS FRICTION**
VERFAHREN UND SYSTEM ZUR REIBUNGSLOSEN IDENTIFIZIERUNG EINER PERSON
METHOD AND SYSTEM FOR THE FRICTIONLESS IDENTIFICATION OF AN INDIVIDUAL

(30) Priorité: 04.12.2019 FR 1913751
(43) Date de publication de la demande: 12.10.2022
(73) Titulaire: Imprimerie Nationale, 75116 Paris (FR)
(72) Inventeur: MALBOROUGT, Jean-Noël, 91160 BALLAINVILLIERS (FR); DIEUPART, Christophe, 94370 SUCY EN BRIE (FR)
(74) Mandataire: Brun, Philippe Alexandre Georges
(86) Numéro de dépôt international: PCT/EP2020/084120
(87) Numéro de publication internationale: WO 2021/110673

(56) Documents cités:
- US-A1- 2003 088 782
- US-A1- 2013 262 873
- US-A1- 2013 339 749

## Description

L'invention concerne un procédé et un système pour identifier des individus, sans friction, tout en respectant le respect de leur liberté et de leur vie privée.

Le garant du respect du règlement général sur la protection des données, veille à ce que le stockage des données biométriques et l'usage que l'on en fait respectent la vie privée des individus.

De ce fait, la mise en œuvre d'un processus d'identification utilisant la biométrie nécessite la mise en place de mécanismes complexes ayant un haut niveau de sécurité garantissant la confidentialité des données et un usage maîtrisé.

Le document US 2013/339749 divulgue un procédé permettant l'identification d'un individu, les données biométriques associées à cet individu étant stockées dans une carte à puce.

Le document US 2013/262873 divulgue un procédé et un système d'authentification d'utilisateurs.

L'enseignement technique du document US 2003/088782 concerne le stockage de données biométriques au niveau d'un réseau.

L'objet de l'invention a notamment pour objectif d'offrir un procédé et un système permettant l'identification d'un individu sans friction, répondant aux objectifs de respect de la vie privée.

Le mot « token » est utilisé dans la suite de la description pour désigner un ensemble de données contenant au moins un modèle biométrique chiffré propre à un individu pour son authentification et d'autres informations qui serviront à son identification (une clé de chiffrement des données, un identifiant Id, ...).

L'invention est définie par les revendications indépendantes 1 et 6.

L'invention concerne un procédé pour identifier un individu à partir de données biométriques au sein d'un système comprenant un dispositif de contrôle, un serveur sur lequel est installée une application de signature et de chiffrement, tel qu'il comporte au moins les étapes suivantes :
- enrôlement d'un individu et acquisition des données biométrique de l'individu,
- transmission desdites données biométriques audit serveur qui génère un modèle biométrique M,
- ledit serveur via son application de signature et de chiffrement signe et chiffre le modèle biométrique, génère un token contenant au moins ledit modèle biométrique M et des données d'identification,
- diviser le token chiffré en au moins deux parties T₁, T₂,
- transmettre une première partie du token T₁ pour stockage sur un terminal mobile de l'individu et d'une deuxième partie du token T₂ à une base de données d'un serveur distincte du stockage,
- contrôler des données d'identité de l'individu,
- détecter le terminal mobile de l'individu par le dispositif de contrôle,
- appairer le terminal mobile détecté avec le dispositif de contrôle,
- récupérer la première partie du token T₁ et la deuxième partie du token T₂, en utilisant une communication sans friction, puis fusionner les deux parties du token pour retrouver le token T initial, déchiffrer le token et vérifier sa signature, retourner le modèle biométrique correspondant,
- en parallèle, acquérir des données biométriques de l'individu, comparer les données biométriques au modèle biométrique et déclencher l'ouverture du moyen de contrôle si les données correspondent.

La communication sans friction est par exemple une liaison de type Bluetooth, Ultrason, Wifi Aware, connues de l'homme du métier.

Les données biométriques peuvent être des caractéristiques physiques du visage, le procédé acquiert une image du visage et génère un modèle biométrique correspondant pour le contrôle.

Selon une autre variante de réalisation, le procédé prend en compte des empreintes digitales, acquiert les empreintes de l'individu et génère les modèles biométriques correspondant pour l'étape de contrôle.

On peut utiliser un QRCode comme support de la première partie du token.

On génère, par exemple, un token chiffré et on réalise sa séparation en deux parties en exécutant les étapes suivantes :
- génération d'une clé de chiffrement AES 256,
- chiffrement du modèle biométrique,
- constitution d'un token contenant la clé AES 256 et le modèle biométrique chiffré,
- transmission de la clé AES, T₁, pour stockage sur le terminal mobile de l'individu,
- transmission de la partie T₂, du modèle biométrique chiffré dans la base de données du serveur.

Selon une autre variante de réalisation non revendiquée, la génération et la séparation du token en deux parties peut comprendre les étapes suivantes :
- on génère deux clés AES 256,
- on chiffre alternativement des blocs de données biométriques avec l'une des clés, puis,
- on transmet une première moitié de chaque bloc chiffré et une première clé pour stockage sur le terminal mobile et une deuxième moitié de chaque bloc chiffré et une deuxième clé pour stockage sur le serveur.

Le procédé est utilisé pour contrôler l'identité d'un voyageur lors de passage des points de contrôle dans un aéroport.

L'invention concerne aussi un système pour identifier un individu à partir de données biométriques au sein d'un système comprenant un dispositif de contrôle, un serveur, ledit individu étant équipé d'un terminal mobile, caractérisé en ce qu'il comporte au moins les éléments suivants :
- un dispositif d'enrôlement configuré pour acquérir les informations d'identité et les données biométriques de l'individu, un moyen de transmission desdites données vers le serveur,
- le serveur comporte une application de génération de modèle biométrique, de chiffrement d'un modèle biométrique et de génération d'un token, une application configurée pour séparer en au moins deux parties ledit token et générer une première partie du token T₁ transmise pour stockage dans une mémoire du terminal mobile de l'individu et une deuxième partie du token T₂ transmise à une base de données dudit serveur distincte de la mémoire, et comprend une application pour fusionner lesdites parties du token lors du contrôle d'accès,
- le dispositif de contrôle d'accès est équipé :
   i. d'un module de communication avec le serveur, de moyens de détection de téléphone mobile, d'un applicatif configuré pour détecter un téléphone mobile, l'appairer, d'une application configurée pour effectuer une comparaison entre un modèle biométrique et des données acquises au niveau du portique de contrôle,
   ii. d'un mécanisme permettant le passage de l'individu.

Le dispositif de contrôle d'accès peut être un portique d'un aéroport, le modèle biométrique est un visage et le dispositif est équipé d'une caméra adaptée à enregistrer en temps réel le visage d'un individu se présentant au portique après appairage.

Le dispositif d'enrôlement est par exemple une borne d'enregistrement en accès libre.

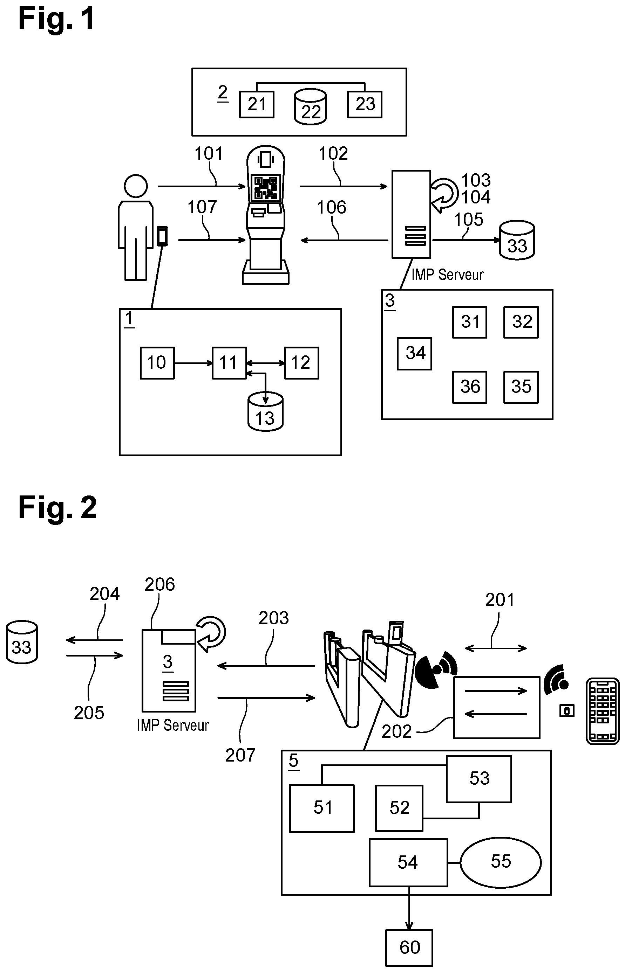

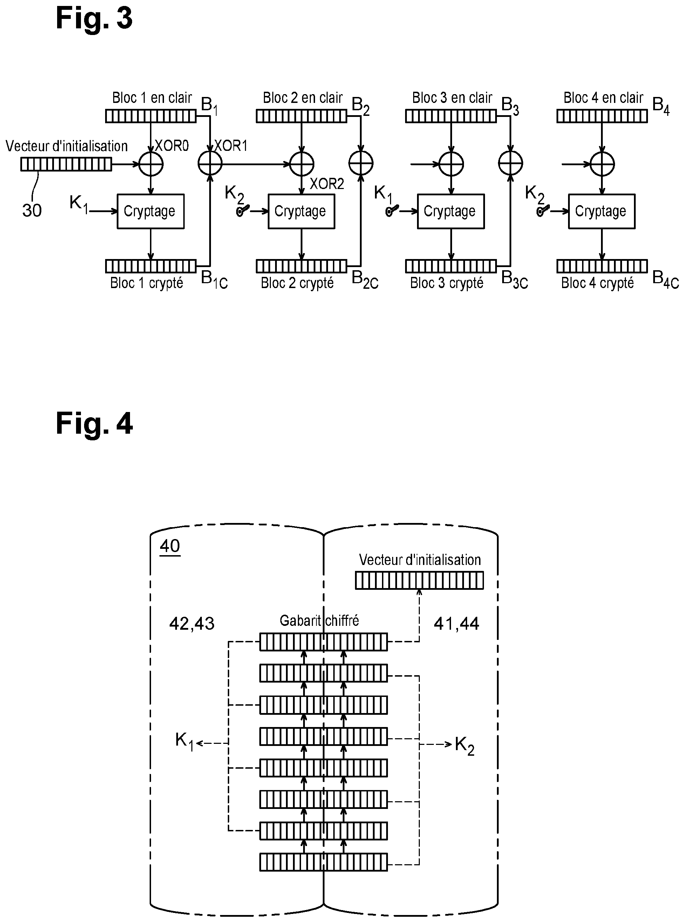

D'autres caractéristiques, détails et avantages de l'invention ressortiront à la lecture de la description faite en référence aux dessins annexés donnés à titre d'exemples non limitatifs et qui représentent, respectivement :
- pour ce qui concerne la figure 1, une illustration des étapes d'enrôlement d'un individu et la génération d'un token représentant son identité,
- pour ce qui concerne la figure 2, une illustration des étapes de vérification des données présentées par un individu,
- pour ce qui concerne la figure 3, un exemple de génération d'un token,
- pour ce qui concerne la figure 4, une méthode de séparation d'un token en deux parties.

La description qui suit est donnée à titre illustratif et nullement limitatif. Le support d'une partie du token est un QRCode. Le contrôle d'identité est celui d'un voyageur au sein d'un aéroport, via le passage d'un ou plusieurs portiques de contrôle pour accéder à une zone « sécurisée », à accès limité, passer une frontière, embarquer à bord d'un avion.

La figure 1 illustre un exemple d'enrôlement des données d'un individu. L'individu dispose d'un terminal mobile 1, tel qu'un smartphone, une tablette qui va lui permettre de dialoguer avec les bornes de contrôle et de mémoriser une partie de ses données d'identité lui permettant de s'authentifier.

Le terminal mobile 1 comprend des moyens de communication (antenne, émetteur, récepteur) 10, un processeur 11 configuré pour exécuter les étapes du procédé, une application 12 servant à disposer d'une partie d'un token mémorisé dans un conteneur sécurisé 13. L'application 12 comporte par exemple les fonctionnalités suivantes : importer (scanner) un nouveau token, gérer un token, consulter des informations sur son déplacement, donner et/ou supprimer son consentement.

Le voyageur va s'enrôler sur une borne d'enregistrement ou kiosque en libre-service dans un aéroport. Le kiosque d'enrôlement 2 est équipé d'un dispositif et d'une application 21 permettant d'afficher un QRCode contenant une partie au moins du token. Le QRCode est stocké pour une durée limitée dans une mémoire temporaire 22 du kiosque. La borne d'enregistrement 2 comprend par un exemple un clavier 23 ou une interface physique qui permet au voyageur de saisir ses données d'identité.

Le système comprend un serveur 3 équipé d'une application de signature et de chiffrement des données 31, une application 32 configurée pour générer un modèle biométrique, une application 36 pour générer un QRCode ou tout autre support équivalent, une application 35 de fusion de données, une base de données 33 ou mémoire mémorisant une partie du token, et des moyens de communication 34 pour dialoguer avec le kiosque 2 lors de la phase d'enrôlement et un portique d'accès 5 lors de la phase de contrôle d'identité (figure 2).

Le voyageur va s'enrôler sur le kiosque afin de pouvoir réaliser un parcours dans l'aéroport qui s'appuiera sur une authentification biométrique, 101. Lors de cette phase d'enrôlement, l'individu donne son consentement explicite pour l'utilisation de ses données personnelles et de sa biométrie, selon un processus de consentement connu de l'homme du métier (IHM de dialogue pour demander et accepter le consentement explicite du voyageur). Puis, le voyageur 1 communique ses données d'identité au kiosque, par exemple en saisissant au niveau du clavier ses données personnelles ou par lecture de son passeport via l'application de lecture du kiosque et acquiert les données biométriques nécessaires à l'authentification. Le kiosque 2 transmet ces données biométriques, 102, au serveur 3 qui via son application génère un modèle biométrique, par exemple de visage, par des mécanismes connus de l'homme du métier.

Le serveur 3 via son application de signature et de chiffrement va signer et chiffrer le modèle biométrique M et générer un token qui comporte à minima le modèle biométrique M. Il mémorise le token chiffré dans une mémoire temporaire, 104. Ce token T est ensuite scindé en N parties de tailles variables. A partir des N parties du token, dans l'exemple deux parties T₁, T₂, le serveur va :
- sauvegarder 105 la deuxième partie T₂ du token dans une base de données 33, par exemple intégrée au serveur,
- générer 106 un QRCode support d'une première partie T₁ du token qu'il transmet au kiosque 2 pour affichage.
Une méthode de génération de token et de scission de token en plusieurs parties est explicitée ci-après.

L'individu voyageur va scanner le QRCode se trouvant sur le kiosque avec son smartphone équipé de l'application qui enregistre les données contenues dans le QRCode dans sa mémoire 13, 107. Le résultat du scan est vérifié par un processus connu de l'homme du métier. Il utilisera cette partie de token pour le contrôle d'identité réalisé par les portiques de contrôle ou portillons d'accès.

La figure 2 illustre l'accès et l'usage du token lors d'un contrôle sur un portillon d'accès. L'identification biométrique d'un individu requiert le consentement ou l'autorisation du voyageur qu'il a donné au moment de son enrôlement sur le kiosque.

Dans cet exemple, un portique d'accès 5 est équipé d'un module de communication 51 avec le serveur, de moyens de détection 52 de smartphones compatibles avec le système, d'un applicatif 53 configuré pour sélectionner un smartphone, le plus proche par exemple et de l'appairer 201, une application 54 qui va effectuer une comparaison entre un modèle biométrique et des données acquises au niveau du portique de contrôle, une image de la personne par exemple. Le résultat de l'application se traduit par exemple sous la forme d'un signal qui va déclencher un mécanisme 60 d'ouverture du portique.

Le dialogue ou échange de données entre le portique d'accès 5 et le terminal mobile du voyageur s'effectue par exemple au moyen de communication sans friction, par exemple de type Bluetooth Low Energy, Ultrason, Wifi Aware, etc. La liaison entre le serveur et le portique d'accès est une liaison standard connue de l'homme du métier.

Le portique d'accès après détection 201 recherche l'identifiant, connu par le système, du service sur le smartphone mettant à disposition la partie du token T₁ mémorisée dans le smartphone du voyageur. La première partie T₁ du token est récupérée 202 par le portique d'accès 5 et transmise 203 au serveur 3 qui analyse son contenu, recherche l'identifiant correspondant Id du voyageur et, en utilisant cet identifiant va rechercher, 204, la deuxième partie du token T₂ dans sa base de données 33. Puis le serveur 3 va fusionner 206 la première partie T₁ du token et la deuxième partie T₂ retournée 205 par la base de données. La fusion des deux parties est déclenchée automatiquement sur réception de la première partie du token. Le token reconstitué est ensuite déchiffré via l'application de chiffrement/déchiffrement du serveur, puis la signature est vérifiée afin de garantir l'authenticité des données. Le serveur retourne ensuite le modèle biométrique M, 207, au portique d'accès qui va effectuer une comparaison biométrique entre le flux vidéo de la caméra et ce modèle biométrique.

Lorsque les données du flux vidéo correspondent au modèle biométrique, le portique d'accès déclenche l'ouverture du passage au voyageur.

Le portique d'accès comprend une caméra 55 ou un dispositif équivalent pour capter l'image de l'individu. Le module communication peut être un Dongle Bluetooth, une carte Wifi, un Haut-parleur, etc.

Les données sont stockées de manière temporaire au niveau de la porte de contrôle d'accès. Au niveau du serveur, les données peuvent être effacées au bout d'un certain temps, ou encore dès que l'individu retire son consentement, selon un processus d'effacement connu de l'homme du métier.

Un exemple de séparation de token consiste à appliquer la méthode suivante :
Chiffrage AES 256 du modèle biométrique
Génération du token : clé AES 256 + modèle biométrique chiffré,
Envoi de la clé AES sur le smartphone, T₁
Stockage du modèle biométrique chiffré dans la base de données, T₂.

La figure 3 illustre une autre méthode de génération d'un token non revendiquée et la figure 4 un exemple de séparation du token en deux parties.

31 - La méthode de génération du token consiste en un chiffrement par propagation des chiffrés en chaîne (AES PCBC).

La méthode utilise un vecteur d'initialisation 30.

Un « OU exclusif » est appliqué entre un vecteur d'initialisation 30 et le premier bloc en clair B₁ pour obtenir un résultat XOR0.

Le résultat du « OU exclusif » XOR0 est chiffré avec une première clé AES, K₁.

En sortie de chiffrement, un « OU exclusif » est appliqué entre le bloc en clair initial et le bloc chiffré B_{1C} pour obtenir un résultat XOR₁.

Un « OU exclusif » entre le résultat XOR₁ et le deuxième bloc en clair B₂ pour obtenir un résultat XOR₂.

Le résultat du « OU exclusif » XOR2 est chiffré avec une deuxième clé AES.

On applique ce principe à tous les blocs suivants en alternant le chiffrement avec l'une des deux clés.

Ce mécanisme permet de s'assurer que l'ensemble des blocs sont nécessaires pour déchiffrer un bloc (i.e. pour déchiffrer le bloc B₂, il faut la clé K₂, le bloc B_{1C} crypté et le bloc B₁ décrypté, qui ne peut l'être qu'à l'aide de la clé K₁ et du vecteur d'initialisation).

La figure 4 illustre les étapes de séparation ou scission d'un token en deux parties.

40 - Séparation des données.

41 - A partir d'un token, une première partie du token est générée contenant : le vecteur d'initialisation, la deuxième clé de chiffrement K₂ et une partie de chaque bloc chiffré.

42 - Une deuxième partie du token est générée contenant : la première clé de chiffrement K₁ et les autres parties de chaque bloc chiffré.

43 - Envoi d'une des deux parties du token sur le smartphone.

44 - Stockage de l'autre partie du token sur le serveur.

La description ci-dessus est donnée pour un support de données de type QRCode. Tout autre support peut être utilisé.

Le token peut être séparé en N parties selon la capacité de stockage.

L'exemple est donné dans le cadre d'un parcours d'identification au sein d'un aéroport, mais peut être étendu à un contrôle au sein d'une gare pour accéder au train, ou bien à tout type d'infrastructure de transport ou d'accueil de personnes, ou encore au sein d'une entreprise pour le contrôle d'accès des salariés ou des visiteurs.

Le support des données biométriques peut être un QRCode ou tout autre support connu de l'homme du métier.

Le modèle biométrique dans l'exemple a été établi à partir d'une image d'un individu. Sans sortir du cadre de l'invention, on pourrait aussi utiliser les empreintes digitales, la voix, etc. permettant l'identification.

Le procédé selon l'invention peut aussi s'appliquer pour le contrôle d'un salarié ou d'un visiteur au sein d'une entreprise équipée de portillons. Le terminal mobile pourrait se présenter sous la forme d'un badge intelligent comportant l'ensemble des fonctionnalités qui viennent d'être décrites.

Le procédé et le système selon l'invention permettent un stockage des données utilisées pour identifier et authentifier un individu sans friction, c'est-à-dire sans nécessité pour l'utilisateur d'avoir à effectuer une action particulière (sortir son passeport ou son smartphone) et en respectant les règles de respect de la vie privée.

## Revendications

1. Procédé pour identifier un individu à partir de données biométriques au sein d'un système comprenant un dispositif de contrôle d'accès (5), un dispositif d'enrôlement (2) et un serveur (3), comportant :
a. des étapes d'enrôlement (101, ..., 107) de l'individu consistant en :
- une acquisition (101) de premières données biométriques de l'individu par le dispositif d'enrôlement (2) ;
- une génération (103) d'un modèle biométrique M à partir desdites premières données biométriques ;
- une signature du modèle biométrique, puis un chiffrement (104) du modèle biométrique signé à partir d'une clé de chiffrement, l'ensemble dudit modèle biométrique signé et chiffré et de la clé de chiffrement formant un token T généré par le serveur
- un enregistrement (107) d'une première partie T₁ dudit token T dans une mémoire de données (13) d'un terminal mobile (1) détenu par l'individu ;
- un enregistrement (105) au sein d'une base de données (33) du serveur (3) d'une deuxième partie T₂ dudit token T ;
b. des étapes de vérification (201, ..., 207) consistant en :
- une acquisition de deuxièmes données biométriques de l'individu par le dispositif de contrôle d'accès (5) ;
- une exploitation conjointe desdites deuxièmes données biométriques et du modèle biométrique pour provoquer ou rejeter un déclenchement de l'ouverture du moyen de contrôle d'accès ;
ledit procédé pour identifier un individu étant agencé en ce que :
i. le procédé comporte une transmission (102) par ledit dispositif d'enrôlement (2) desdites premières données biométriques au serveur (3) préalablement à la génération (103) du modèle biométrique M ;
ii. ladite génération (103) du modèle biométrique M à partir des premières données biométriques, la signature et le chiffrement de ce dernier (104) sont réalisés par ledit serveur (3), ce dernier contenant une application de signature et de chiffrement d'un modèle biométrique ;
iii. la première partie T₁ du token T comprend la clé de chiffrement du modèle biométrique signé et un identifiant Id de l'individu ;
iv. la deuxième partie T₂ dudit token T comprend le modèle biométrique signé et chiffré ;
v. l'enregistrement (107) de la première partie T₁ dudit token T dans une mémoire de données (13) du terminal mobile (1) détenu par l'individu est précédé par :
- une génération par le serveur (3) d'un QRCode support de ladite première partie T₁ du token T affichable par le dispositif d'enrôlement (2) ;
- une transmission (106) dudit QRCode à destination du dispositif d'enrôlement (2) ;
- un affichage par ledit dispositif d'enrôlement (2) dudit QRCode support de la première partie T₁ dudit token T ;
- un scan dudit QRCode support de ladite première partie T₁ du token T affiché par le terminal mobile (1) détenu par l'individu pour retrouver ladite première partie T₁ dudit token T à partir dudit QRCode scanné par ledit terminal mobile (1) détenu par l'individu ;
vi. l'exploitation conjointe desdites deuxièmes données biométriques et du modèle biométrique pour provoquer ou rejeter un déclenchement de l'ouverture du moyen de contrôle d'accès est précédée par :
- un appairage du terminal mobile (1) détenu par l'individu détecté avec le dispositif de contrôle d'accès (5) ;
- une transmission (202) par le terminal mobile (1), au moyen d'une communication sans friction, de la première partie T₁ du token T enregistrée dans la mémoire de données (13) dudit terminal mobile (1) au dispositif de contrôle d'accès (5) ;
- une transmission (203) par le dispositif de contrôle d'accès (5) de ladite première partie T₁ du token T au serveur (3) ;
- une recherche (204) effectuée par ledit serveur (3) dans la base de données (33) dudit serveur (3) d'une deuxième partie T₂ de token T à partir de la première partie T₁ dudit token T ;
- une fusion (206) par le serveur (3) desdites première et deuxième parties T₁ et T₂ dudit token T pour recouvrer ledit token T ;
- un déchiffrement par le serveur (3) du modèle biométrique signé et chiffré compris dans ledit token T à partir de la première partie T1 de celui-ci et une vérification de la signature du modèle biométrique ;
- une transmission dudit modèle biométrique déchiffré par le serveur au dispositif de contrôle d'accès (5) ;
vii. l'exploitation conjointe desdites deuxièmes données biométriques et du modèle biométrique pour provoquer ou rejeter un déclenchement de l'ouverture du moyen de contrôle d'accès consiste en une comparaison par le dispositif de contrôle d'accès (5) desdites deuxième données biométriques acquises avec le modèle biométrique déchiffré et connu dudit dispositif de contrôle d'accès (5), le déclenchement de l'ouverture du moyen de contrôle d'accès étant provoqué si les deuxièmes données biométriques acquises correspondent au modèle biométrique déchiffré.

2. Procédé selon la revendication 1 tel que la communication sans friction est une communication de type Bluetooth, Ultrason ou Wifi Aware.

3. Procédé selon l'une des revendications 1 ou 2 tel que les premières et deuxièmes données biométriques sont des caractéristiques physiques d'un visage à partir d'une image dudit visage.

4. Procédé selon l'une des revendications 1 ou 2 tel que les données biométriques consistent en des empreintes digitales.

5. Procédé selon l'une des revendications 1 à 4 tel que le chiffrement (104) du modèle biométrique par ledit serveur (3) consiste en :
- une génération de la clé de chiffrement du modèle biométrique sous la forme d'une clé de chiffrement AES 256 ;
- le chiffrement en tant que tel du modèle biométrique à partir de ladite clé de chiffrement AES 256 .

6. Système pour identifier un individu à partir de données biométriques comprenant un dispositif d'enrôlement (2), un dispositif de contrôle d'accès (5), un serveur (3), ledit individu étant équipé d'un terminal mobile (1), ledit système étant tel que, pour mettre en œuvre un procédé selon l'une quelconque des revendications précédentes :
- le dispositif d'enrôlement (2) est configuré pour acquérir des informations d'identité et des premières données biométriques de l'individu et comporte un moyen de transmission desdites premières données biométriques à destination du serveur (3) ;
- le serveur (3) comporte :
∘ une application (31) de génération de modèle biométrique, de signature et de chiffrement d'un modèle biométrique et de génération d'un token T comportant ledit modèle biométrique M signé et chiffré et la clé de chiffrement,
∘ une application (32) configurée pour séparer en au moins deux parties ledit token T et générer une première partie du token T₁ transmise au moyen d'un QRCode affichable par le dispositif d'enrôlement (2) pour stockage, après scan dudit QRCode par le terminal mobile (1) de l'individu, dans une mémoire (13) de ce dernier et une deuxième partie du token T₂ transmise à une base de données (33) dudit serveur (3) distincte de la mémoire (13) du terminal mobile (1),
∘ une application (35) pour fusionner lesdites parties T₁ et T₂ du token T lors du contrôle d'accès,
- le dispositif de contrôle d'accès (5) est équipé :
- d'un module de communication (51) avec le serveur (3), de moyens d'acquisition (55) de deuxièmes données biométriques, de moyens de détection (52) de terminal (1), d'un applicatif (53) configuré pour détecter un tel terminal mobile (1), l'appairer, d'une application (54) configurée pour effectuer une comparaison entre un modèle biométrique et lesdites deuxièmes données biométriques,
- d'un mécanisme (60) permettant le passage de l'individu.

7. Système selon la revendication 6 pour lequel le dispositif de contrôle d'accès (5) est un portique d'un aéroport, le modèle biométrique est celui d'un visage, les moyens d'acquisition (55) de deuxièmes données biométriques consistant en une caméra adaptée pour capter en temps réel le visage d'un individu se présentant au portique après appairage dudit dispositif de contrôle d'accès (5) avec le terminal mobile (1) de l'individu, ledit terminal mobile (1) consistant en un smartphone ou une tablette.

8. Système selon l'une des revendications 6 ou 7 tel que le dispositif d'enrôlement est une borne d'enregistrement en accès libre.

## Patentansprüche

1. Verfahren zum Identifizieren einer Person anhand von biometrischen Daten innerhalb eines Systems, das ein Zugangskontrollgerät (5), ein Registrierungsgerät (2) und einen Server (3) umfasst, das Folgendes beinhaltet:
a. Schritte (101, ..., 107) zum Registrieren der Person bestehend aus:
- Erfassen (101) erster biometrischer Daten der Person durch das Registrierungsgerät (2);
- Erzeugen (103) eines biometrischen Modells M anhand der genannten ersten biometrischen Daten;
- Signieren des biometrischen Modells, dann Verschlüsseln (104) des signierten biometrischen Modells anhand eines Verschlüsselungsschlüssels, wobei das genannte signierte und verschlüsselte biometrische Modell und der Verschlüsselungsschlüssel zusammen ein vom Server erzeugtes Token T bilden;
- Speichern (107) eines ersten Teils T₁ des genannten Tokens T in einem Datenspeicher (13) eines von der Person gehaltenen mobilen Endgeräts (1);
- Speichern (105) eines zweiten Teils T₂ des genannten Tokens T in einer Datenbank (33) des Servers (3);
b. Schritte (201, ..., 207) zum Verifizieren bestehend aus:
- Erfassen zweiter biometrischer Daten der Person durch das Zugangskontrollgerät (5);
- gemeinsames Nutzen der genannten zweiten biometrischen Daten und des biometrischen Modells zum Bewirken oder Verweigern einer Auslösung des Öffnens des Zugangskontrollmittels;
wobei das genannte Verfahren zum Identifizieren einer Person so ausgelegt ist, dass:
i. das Verfahren eine Übertragung (102) der genannten ersten biometrischen Daten durch das genannte Registrierungsgerät (2) zum Server (3) vor der Erzeugung (103) des biometrischen Modells M beinhaltet;
ii. das genannte Erzeugen (103) des biometrischen Modells M anhand der ersten biometrischen Daten, das Signieren und das Verschlüsseln letzterer (104) durch den genannten Server (3) durchgeführt werden, wobei letzterer eine Anwendung für Signatur und Verschlüsselung eines biometrischen Modells enthält;
iii. der erste Teil T₁ des Tokens T den Verschlüsselungsschlüssel des signierten biometrischen Modells und eine Kennung Id der Person umfasst;
iv. der zweite Teil T₂ des genannten Tokens T das signierte und verschlüsselte biometrische Modell umfasst;
v. dem Speichern (107) des ersten Teils T₁ des genannten Tokens T in einem Datenspeicher (13) des von der Person gehaltenen mobilen Endgeräts (1) Folgendes vorausgeht:
- Erzeugen, durch den Server (3), eines den genannten ersten Teil T₁ des Tokens T tragenden QRCodes, der vom Registrierungsgerät (2) angezeigt werden kann;
- Übertragen (106) des genannten QRCodes zum Registrierungsgerät (2);
- Anzeigen des den ersten Teil T₁ des genannten Tokens T tragenden genannten QRCodes durch das genannte Registrierungsgerät (2);
- Scannen des den genannten ersten Teil T₁ des Tokens T tragenden genannten QRCodes, der von dem von der Person gehaltenen mobilen Endgerät (1) angezeigt wird, um den genannten ersten Teil T₁ des genannten Tokens T anhand des genannten QRCodes zu finden, der von dem von der Person gehaltenen genannten mobilen Endgerät (1) gescannt wird;
vi. dem gemeinsamen Nutzen der genannten zweiten biometrischen Daten und des biometrischen Modells zum Bewirken oder Verweigern einer Auslösung des Öffnens des Zugangskontrollmittels Folgendes vorausgeht:
- Verpaaren des von der erkannten Person gehaltenen mobilen Endgeräts (1) mit dem Zugangskontrollgerät (5);
- Übertragen (202), durch das mobile Endgerät (1) mittels einer reibungslosen Kommunikation, des ersten Teils T₁ des Tokens T, der im Datenspeicher (13) des genannten mobilen Endgeräts (1) gespeichert ist, zum Zugangskontrollgerät (5);
- Übertragen (203) des genannten ersten Teils T₁ des Tokens T durch das Zugangskontrollgerät (5) zum Server (3);
- Suchen (204), durchgeführt von dem genannten Server (3) in der Datenbank (33) des genannten Servers (3), nach einem zweiten Teil T₂ des Tokens T anhand des ersten Teils T₁ des genannten Tokens T;
- Zusammenführen (206) des genannten ersten und zweiten Teils T₁ und T₂ des genannten Tokens T durch den Server (3), um das genannte Token T zu gewinnen;
- Entschlüsseln, durch den Server (3), des in dem genannten Token T enthaltenen signierten und verschlüsselten biometrischen Modells anhand des ersten Teils T₁ desselben und Verifizieren der Signatur des biometrischen Modells;
- Übertragen des genannten vom Server entschlüsselten biometrischen Modells zum Zugangskontrollgerät (5);
vii. das gemeinsame Nutzen der genannten zweiten biometrischen Daten und des biometrischen Modells zum Bewirken oder Verweigern einer Auslösung des Öffnens des Zugangskontrollmittels besteht im Vergleichen, durch das Zugangskontrollgerät (5), der genannten zweiten erfassten biometrischen Daten mit dem entschlüsselten und bekannten biometrischen Modell des genannten Zugangskontrollgeräts (5), wobei die Auslösung des Öffnens des Zugangskontrollmittels bewirkt wird, wenn die erfassten zweiten biometrischen Daten dem entschlüsselten biometrischen Modell entsprechen.

2. Verfahren nach Anspruch 1, bei dem die reibungslose Kommunikation eine Kommunikation vom Typ Bluetooth, Ultraschall oder Wifi Aware ist.

3. Verfahren nach Anspruch 1 oder 2, bei dem die ersten und zweiten biometrischen Daten physische Merkmale eines Gesichts anhand eines Bilds des genannten Gesichts sind.

4. Verfahren nach Anspruch 1 oder 2, bei dem die biometrischen Daten aus Fingerabdrücken bestehen.

5. Verfahren nach einem der Ansprüche 1 bis 4, bei dem die Verschlüsselung (104) des biometrischen Modells durch den genannten Server (3) besteht aus:
- Erzeugen des Verschlüsselungsschlüssels des biometrischen Modells in Form eines AES-256-Verschlüsselungsschlüssels;
- Verschlüsseln des biometrischen Modells als solches anhand des genannten AES-256-Verschlüsselungsschlüssels.

6. System zum Identifizieren einer Person anhand von biometrischen Daten, das ein Registrierungsgerät (2), ein Zugangskontrollgerät (5) und einen Server (3) umfasst, wobei die genannte Person mit einem mobilen Endgerät (1) ausgestattet ist, wobei das genannte System so ist, dass zum Durchführen eines Verfahrens nach einem der vorherigen Ansprüche:
- das Registrierungsgerät (2) zum Erfassen von Identitätsinformationen und ersten biometrischen Daten der Person konfiguriert ist und ein Mittel zur Übertragung der genannten ersten biometrischen Daten zum Server (3) umfasst;
- der Server (3) Folgendes umfasst:
o eine Anwendung (31) zum Erzeugen eines biometrischen Modells, zum Signieren und Verschlüsseln eines biometrischen Modells und zum Erzeugen eines Tokens T, das das genannte signierte und verschlüsselte biometrische Modell M und den Verschlüsselungsschlüssel enthält,
∘ eine Anwendung (32), konfiguriert zum Aufteilen des genannten Tokens T in mindestens zwei Teile und Erzeugen eines ersten Teils des Tokens T₁, der mittels eines QRCodes übertragen wird, der vom Registrierungsgerät (2) angezeigt werden kann, um nach dem Scannen des genannten QRCodes durch das mobile Endgerät (1) der Person in einem Speicher (13) des letzteren gespeichert zu werden, und eines zweiten Teils des Tokens T₂, der zu einer Datenbank (33) des genannten Servers (3) übertragen wird, die sich vom Speicher (13) des mobilen Endgeräts (1) unterscheidet,
∘ **eine Anwendung** (35) zum Zusammenführen der genannten Teile T₁ und T₂ des Tokens T bei der Zugangskontrolle,
- das Zugangskontrollgerät (5) mit Folgendem ausgestattet ist:
- einem Modul (51) zum Kommunizieren mit dem Server (3), Mitteln (55) zum Erfassen zweiter biometrischer Daten, Mitteln (52) zum Erkennen eines Endgeräts (1), einer Anwendungssoftware (53) konfiguriert zum Erkennen eines solchen mobilen Endgeräts (1), und zum Verpaaren desselben, einer Anwendung (54) konfiguriert zum Durchführen eines Vergleichs zwischen einem biometrischen Modell und den genannten zweiten biometrischen Daten,
- einem Mechanismus (60), der die Passage der Person zulässt.

7. System nach Anspruch 6, bei dem das Zugangskontrollgerät (5) ein Gate eines Flughafens ist, das biometrische Modell das eines Gesichts ist, die Mittel (55) zur Erfassung zweiter biometrischer Daten aus einer Kamera bestehen, die zum Aufnehmen des Gesichts einer Person, die sich nach dem Verpaaren des genannten Zugangskontrollgeräts (5) mit dem mobilen Endgerät (1) der Person am Gate vorstellt, in Echtzeit ausgelegt ist, wobei das genannte mobile Endgerät (1) aus einem Smartphone oder einem Tablet besteht.

8. System nach Anspruch 6 oder 7, bei dem das Registrierungsgerät ein frei zugängliches Anmeldeterminal ist.

## Claims

1. Method for identifying an individual on the basis of biometric data within a system comprising an access control device (5), an enrolment device (2) and a server (3), including:
a. steps of enrolling (101, ..., 107) the individual consisting of:
- acquiring (101) first biometric data of the individual by the enrolment device (2);
- generating (103) a biometric model M on the basis of said first biometric data;
- signing the biometric model, then encrypting (104) the signed biometric model on the basis of an encryption key, said signed and encrypted biometric model and the encryption key together forming a token T generated by the server;
- recording (107) a first part T₁ of said token T in a data memory (13) of a mobile terminal (1) held by the individual;
- recording (105) a second part T₂ of said token T within a database (33) of the server (3);
b. verification steps (201, ..., 207) consisting of:
- acquiring second biometric data of the individual by the access control device (5);
- jointly using said second biometric data and the biometric model in order to cause or reject a triggering of the opening of the access control means;
said method for identifying an individual being arranged in that:
i. the method includes a transmission (102), by said enrolment device (2), of said first biometric data to the server (3) prior to the generation (103) of the biometric model M;
ii. said generation (103) of the biometric model M on the basis of the first biometric data, the signing and the encryption of the latter (104) are carried out by said server (3), the latter containing an application for signing and encrypting a biometric model;
iii. the first part T₁ of the token T comprises the encryption key of the signed biometric model and an identifier Id of the individual;
iv. the second part T₂ of said token T comprises the signed and encrypted biometric model;
v. the recording (107) of the first part T₁ of said token T in a data memory (13) of the mobile terminal (1) held by the individual is preceded by:
- a generation, by the server (3), of a QR code supporting said first part T₁ of the token T that can be displayed by the enrolment device (2);
- a transmission (106) of said QR code to the enrolment device (2);
- a display, by said enrolment device (2), of said QR code supporting the first part T₁ of said token T;
- a scan of said QR code supporting said first part T₁ of the token T displayed by the mobile terminal (1) held by the individual in order to find said first part T₁ of said token T on the basis of said QR code scanned by said mobile terminal (1) held by the individual;
vi. the joint use of said second biometric data and the biometric model in order to cause or reject a triggering of the opening of the access control means is preceded by:
- a pairing of the mobile terminal (1) held by the detected individual with the access control device (5);
- a transmission (202), by the mobile terminal (1), by means of frictionless communication, of the first part T₁ of the token T recorded in the data memory (13) of said mobile terminal (1) to the access control device (5);
- a transmission (203), by the access control device (5), of said first part T₁ of the token T to the server (3);
- a search (204) performed by said server (3) in the database (33) of said server (3) for a second part T₂ of token T on the basis of the first part T₁ of said token T;
- a merging (206), by the server (3), of said first and second parts T₁ and T₂ of said token T in order to recover said token T;
- a decryption, by the server (3), of the signed and encrypted biometric model comprised in said token T on the basis of the first part T₁ of the latter and a verification of the signature of the biometric model;
- a transmission of said decrypted biometric model by the server to the access control device (5);
vii. the joint use of said second biometric data and the biometric model in order to cause or reject a triggering of the opening of the access control means consists of a comparison, by the access control device (5), of said acquired second biometric data with the decrypted and known biometric model of said access control device (5), the triggering of the opening of the access control means being caused if the acquired second biometric data correspond to the decrypted biometric model.

2. Method according to claim 1 such that the frictionless communication is a communication of the Bluetooth, ultrasonic or Wi-Fi Aware type.

3. Method according to one of claims 1 or 2 such that the first and second biometric data are physical characteristics of a face on the basis of an image of said face.

4. Method according to one of claims 1 or 2 such that the biometric data consist of fingerprints.

5. Method according to one of claims 1 to 4 such that the encryption (104) of the biometric model by said server (3) consists of:
- generating the encryption key of the biometric model in the form of an AES 256 encryption key;
- encrypting the biometric model as such on the basis of said AES 256 encryption key.

6. System for identifying an individual on the basis of biometric data comprising an enrolment device (2), an access control device (5), a server (3), said individual being equipped with a mobile terminal (1), said system being such that, in order to implement a method according to any one of the preceding claims:
- **the enrolment** device (2) is configured to acquire identity information and first biometric data of the individual and contains a means of transmitting said first biometric data to the server (3);
- the server (3) contains:
∘ an application (31) for generating a biometric model, for signing and encrypting a biometric model and for generating a token T containing said signed and encrypted biometric model M and the encryption key,
o an application (32) configured to separate said token T into at least two parts and generate a first part of the token T₁ transmitted by means of a QR code that can be displayed by the enrolment device (2) for storage, after said QR code has been scanned by the individual's mobile terminal (1), in a memory (13) of the latter and a second part of the token T₂ transmitted to a database (33) of said server (3) that is separate from the memory (13) of the mobile terminal (1),
∘ an application (35) for merging said parts T₁ and T₂ of the token T during the access control,
- the access control device (5) is equipped with:
- a module for communicating (51) with the server (3), means of acquiring (55) second biometric data, means of detecting (52) a terminal (1), application software (53) configured to detect such a mobile terminal (1), and pair it, an application (54) configured to carry out a comparison between a biometric model and said second biometric data,
- a mechanism (60) allowing the individual to pass through.

7. System according to claim 6 in which the access control device (5) is an airport security gate, the biometric model is that of a face, the means of acquiring (55) second biometric data consisting of a camera suitable for capturing, in real time, the face of an individual arriving at the security gate after said access control device (5) has been paired with the individual's mobile terminal (1), said mobile terminal (1) consisting of a smartphone or a tablet.

8. System according to one of claims 6 or 7 such that the enrolment device is a freely accessible check-in terminal.
